Europäisches Patentamt

European Patent Office

Office européen des brevets

(19)

(11) Veröffentlichungsnummer: **0 261 427**
B1

(12) # EUROPÄISCHE PATENTSCHRIFT

(45) Veröffentlichungstag der Patentschrift:
24.10.90

(51) Int. Cl.⁵: **F16F 9/52**, F16F 9/10

(21) Anmeldenummer: 87112373.3

(22) Anmeldetag: 26.08.87

(54) Zweirohr-Stossdämpfer.

(30) Priorität: 25.09.86 DE 3632562

(43) Veröffentlichungstag der Anmeldung:
30.03.88 Patentblatt 88/13

(45) Bekanntmachung des Hinweises auf die Patenterteilung:
24.10.90 Patentblatt 90/43

(84) Benannte Vertragsstaaten:
DE FR GB IT NL SE

(56) Entgegenhaltungen:
EP-A- 0 183 039
DE-A- 2 851 070
FR-A- 1 076 192
FR-A- 1 117 141
US-A- 2 036 955
US-A- 3 466 055

(73) Patentinhaber: ROBERT BOSCH GMBH, Postfach 50,
D-7000 Stuttgart 1(DE)

(72) Erfinder: Mettner, Michael, Dipl.-Ing., Waliser
Strasse 4/1, D-7140 Ludwigsburg(DE)

## Beschreibung

### Stand der Technik

Die Erfindung bezieht sich auf einen Zweirohr-Stoßdämpfer nach der Gattung des Hauptanspruchs. Ein derartiger Stoßdämpfer ist bekannt (US 2 036 955).

Bei einem solchen Zweirohr-Stoßdämpfer liegt innen der eigentliche Dämpferzylinder und dieser wird von einem Außenzylinder umgeben, so daß zwischen den beiden Zylindern eine Außenkammer gebildet ist. Im inneren Zylinder bewegt sich der Dämpferkolben. Entscheidend für seine Arbeit ist das Flächenverhältnis der Gesamtkolbenfläche zu der Ringfläche des Kolbens abzüglich des Kolbenstangenquerschnittes.

Bei der bekannten Bauart wird gewöhnliche Stoßdämpfer-Flüssigkeit verwendet. Es gibt aber auch bereits Stoßdämpfer, bei denen eine rheologische Flüssigkeit verwendet wird (EP-A 0 183 039). Eine solche Flüssigkeit wird durch ein elektrostatisches Feld geführt, durch das die Viskosität der Flüssigkeit verändert werden kann. Auf diese Weise kann dann der Stoßdämpfer sich bei der Fahrt verändernden Bedingungen wie Beschleunigung, Geschwindigkeit, Lenkeinschlag oder Beladung angepaßt werden.

Eine rheologische Flüssigkeit hat aber die Eigenheit, daß sie sich sehr leicht entmischt. Als Folge davon setzen sich sehr leicht dispergierte Teilchen ab, wodurch die Arbeit der Flüssigkeit beeinträchtigt wird.

Der Erfindung liegt die Aufgabe zugrunde, diese Nachteile zu vermeiden und einen Zweirohr-Stoßdämpfer zu schaffen, bei dem infolge gleichgerichteter und völliger Durchströmung das gesamte Volumen der rheologischen Flüssigkeit bei der Arbeit des Stoßdämpfers umgewälzt wird.

Die Aufgabe wird gemäß der Erfindung bei einem gattungsgemäßen Zweirohr-Stoßdämpfer durch die kennzeichnenden Merkmale des Patentanspruchs gelöst.

### Zeichnung

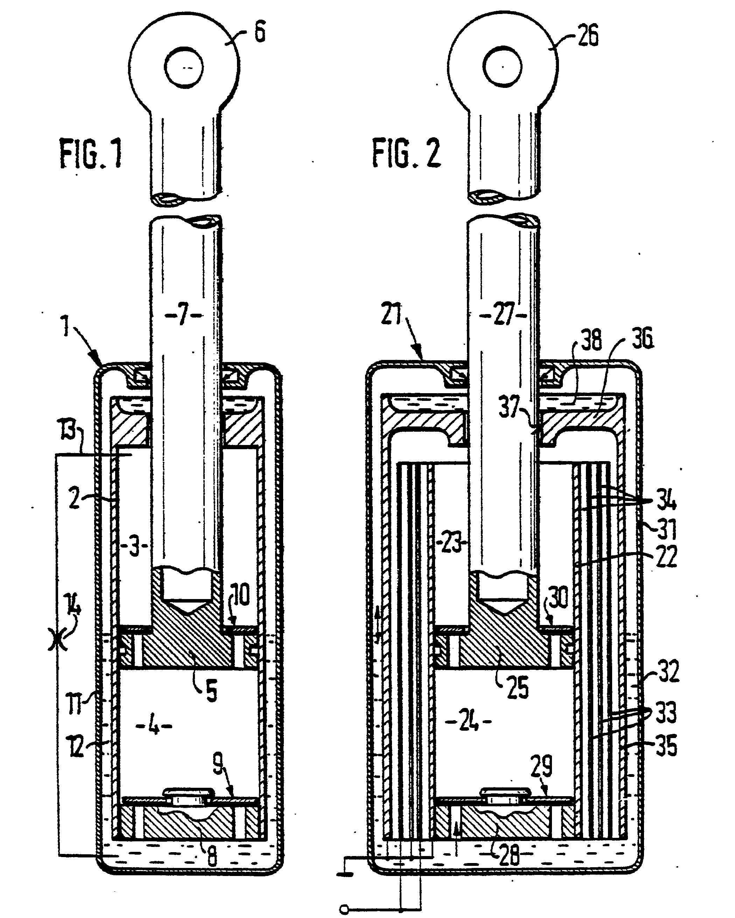

Ein Ausführungsbeispiel der Erfindung ist in der Zeichnung dargestellt und in der nachfolgenden Beschreibung näher erläutert. Es zeigen: Figur 1 einen Zweirohr-Stoßdämpfer mit Umlauf einer gewöhnlichen Flüssigkeit und Figur 2 einen Zweirohr-Stoßdämpfer mit elektrorheologischer Flüssigkeit.

### Beschreibung des Ausführungsbeispieles

Ein Zweirohr-Stoßdämpfer 1 hat eine in einem Zylinder 2 gebildete Innenkammer 3, 4, in der ein Kolben 5 beweglich ist, der von einer mit ihrem freien Ende 6 nach außen ragenden Kolbenstange 7 getragen wird. Der Zylinder 2 hat einen Boden 8, in dem ein nach innen öffnendes Rückschlagventil 9 angeordnet ist. Im Kolben 5 ist ebenfalls ein Rückschlagventil 10 angeordnet, und dieses öffnet von der Kammer 4 zu der Kammer 3.

Der Zylinder 2 wird von einem Außenzylinder 11 umgeben, der eine Außenkammer 12 enthält, die lediglich zum Teil mit Flüssigkeit gefüllt ist, der andere Teil wird von einem Gaspolster gebildet. Wie nur schematisch dargestellt, besteht eine Verbindungsleitung 13 zwischen der Innenkammer 3 und einer unteren Stelle der Außenkammer 12. Und in diese Verbindugnsleitung 13 ist eine Drosselstelle 14 eingesetzt.

Bei der Arbeit des Stoßdämpfers 1 verkleinert bei einer Abstandsverkürzung (Druckstufe) der Kolben 5 die Innenkammer 4 und, da das Rückschlagventil 9 geschlossen ist, wird Flüssigkeit aus der Kammer 4 in die Kammer 3 verdrängt. Diese vergrößert sich zwar bei der genannten Einfederung des Stoßdämpfers, sie kann aber die gesamte Flüssigkeitsmenge nicht aufnehmen, weil die Kolbenstange 7 ebenfalls in die Innenkammer 3 eintaucht. Der Flüssigkeitsüberschuß wird über die Verbindungsleitung 13 in die Außenkammer 12 gedrückt. Dabei muß die Flüssigkeit die Drossel 14 durchströmen, die als einzige Drossel 14 im System maßgebend ist für die Drosselung des Flüssigkeitsumlaufes im Stoßdämpfer im Arbeitsbereich der Druckstufe.

Beim Ausfedern des Stoßdämpfers (Zugstufe), d.h. bei seiner Verlängerung, schließt das Rückschlagventil 10 und Flüssigkeit aus der Kammer 3 wird über die Verbindungsleitung 13 und über die Drossel 14 in die Außenkammer 12 verdrängt. Da in der Innenkammer 4 ein Sog entsteht, öffnet das Boden-Rückschlagventil 9, und es wird Flüssigkeit aus der Außenkammer 12 in die Innenkammer 4 gesaugt.

Es ist zu erkennen, daß auf diese Weise ein stets gleichgerichteter Flüssigkeitsumlauf entsteht und daß sich deshalb kein Sediment bilden kann.

Bei der Bauart nach der Figur 2 ist als Flüssigkeit eine elektrorheologische Flüssigkeit verwendet. Dies sind Fluide, die ihren Scherwiderstand in Abhängigkeit eines auf sie einwirkenden elektrischen Feldes verändern.

Der Zweirohr-Stoßdämpfer 21 hat eine in einem Zylinder 22 gebildete Innenkammer 23, 24, in der ein Kolben 25 beweglich ist, der von einer mit ihrem freien Ende 26 nach außen ragenden Kolbenstange 27 getragen wird. Der Zylinder 22 hat einen Boden 28, in dem ein nach innen öffnendes Rückschlagventil 29 angeordnet ist. Im Kolben 25 ist ebenfalls ein Rückschlagventil 30 angeordnet, und dieses öffnet von der Kammer 24 zu der Kammer 23.

Der Zylinder 22 wird von einem Außenzylinder 31 umgeben, der eine Außenkammer 32 aufnimmt, die lediglich zum Teil mit Flüssigkeit gefüllt ist; der andere Teil wird von einem Gaspolster gebildet.

Die Innenkammer 23 hat über einen axial gerichteten, ringzylindrischen Durchgang 34 eine Verbindung zu einer unteren Stelle der Außenkammer 32. Der Durchgang 34 wird von mehreren konzentrisch ineinanderliegenden Zylindern 33 gebildet, die von einem Hohlzylinder 35 aufgenommen und von diesem getragen werden. Der Hohlzylinder 35, der Innenzylinder 22 und ein mittlerer Zylinder 33 bilden eine Masse-Elektrode und zwei dazwischen angeordnete Zylinder 33 bilden isolierte Gegenelektroden.

Der Hohlzylinder 35 ist oben mit einem angeformten Deckel 36 abgedeckt, der ein Durchgangsloch 37 für die Kolbenstange 27 aufweist und um das Loch 37 herum eine Aussparung 38 zur Aufnahme eines Flüssigkeits-Vorrates hat, der das Eindringen von Luft in den Innenzylinder verhindert.

Bei der Arbeit des Stoßdämpfers 21 verkleinert bei einer Abstandsverkürzung der Kolben 25 die Innenkammer 24 und, da das Rückschlag ventil 29 geschlossen ist, wird Flüssigkeit aus der Kammer 24 in die Kammer 23 verdrängt. Diese vergrößert sich zwar bei der genannten Einfederung des Stoßdämpfers 21, sie kann aber die gesamte Flüssigkeitsmenge nicht aufnehmen, weil die Kolbenstange 27 ebenfalls in die Innenkammer 23 eintaucht. Der Flüssigkeitsüberschuß wird über den Durchgang 34 in die Außenkammer 32 gedrückt (Druckstufe).

In dem Durchgang 34 herrscht durch Anschluß der Elektroden an eine Stromquelle ein elektrostatisches Feld, durch das das Fließen der Flüssigkeit mehr oder weniger stark gedrosselt wird. Da dies die einzige Drossel des Systems ist, ist sie maßgebend für die Drosselung des Flüssigkeitsumlaufes im Stoßdämpfer.

Beim Ausfedern des Stoßdämpfers (Zugstufe), d.h. bei seiner Verlängerung, schließt das Rückschlagventil 30, und Flüssigkeit aus der Kammer 23 wird über den Durchgang 34 in die Außenkammer 32 verdrängt. Da in der Innenkammer 24 ein Sog entsteht, öffnet das Boden-Rückschlagventil 29, und es wird Flüssigkeit aus der Außenkammer 32 in die Innenkammer 24 gesaugt.

Es ist zu erkennen, daß dadurch ein stets gleichgerichteter Flüssigkeitsumlauf entsteht und daß sich deshalb in der rheologischen Flüssigkeit kein Sediment bildet.

Die Strömungsrichtung durch die Drossel-Strecke ist also für jede Bewegungsrichtung des Stoßdämpfers die gleiche. Der Volumenstrom wird in Ausfederrichtung von der Ringfläche des Kolbens und in Einfederrichtung vom Querschnitt der Kolbenstange bestimmt. Auch ist ein beliebiges oder auch gleiches Verhältnis der Dämpferkräfte für Zug- und Druckrichtung einstellbar, da dieses lediglich vom Verhältnis Ringfläche zu Stangenquerschnitt abhängt.

Auf diese Weise wird die bei den zur Zeit gebräuchlichen rheologischen Flüssigkeiten bestehende große Gefahr der Entmischung, d.h. des Absetzens der dispergierten Teilchen am Boden des Dämpfers, vermieden. Infolge der gleichgerichteten Durchströmung der Drossel wird auch bei kleinen Schwingungsamplituden, wie sie bei einem Kraftfahrzeug-Stoßdämpfer bei Autobahnfahrt auftreten, das gesamte Flüssigkeitsvolumen umgewälzt. Infolge der Durchströmung der Drossel in nur einer Richtung sind bei der Bewegungsumkehr des Dämpferkolbens die Druckspitzen, und damit die dynamischen Strömungsverluste sehr klein.

Die bei den heutigen elektro-rheologischen Flüssigkeiten erforderlichen großen Scherflächen sind bei geringem hydraulischen Grundwiderstand aufgrund der Viskosität der Flüssigkeit und der besonderen Bauart des Stoßdämpfers leicht zu realisieren, ohne den Hub des Kolbens begrenzen zu müssen, wie dies bei einem Einrohr-Stoßdämpfer erforderlich wäre.

Darüber hinaus ist das Verhältnis Scherspaltlänge zu Elektrodenlänge beliebig einstellbar, z.B. kürzer oder gleich der Länge des inneren Zylinders, womit eine einstellbare viskose Grunddämpfung erreichbar ist. Weiterhin kann durch eine Segmentierung der Elektrodenfläche und durch eine getrennte Ansteuerung der einzelnen Segmente der Stellbereich des Stoßdämpfers vergrößer werden.

Schließlich befindet sich bei der erfindungsgemäßen Bauart keine Hochspannung an bewegten Teilen des Stoßdämpfers. Dadurch können sämtliche an Hochspannung liegenden Teile vollständig abgeschirmt werden.

**Patentansprüche**

1. Zweirohr-Stoßdämpfer, der zwischen zwei ihren Abstand zueinander veränderbaren Teilen, insbesondere Fahrzeugteilen angeordnet ist und der einen von einer Kolbenstange (7, 27) getragenen Kolben (5, 25) aufweist, der zwei flüssigkeitsgefüllte Innenkammern (3, 4; 23, 24) voneinander trennt und der mit einem von einem Rückschlagventil (10, 30) überwachten Verbindungskanal versehen ist, und mit einem Zylinderboden (8, 28), der ebenfalls einen von einem Rückschlagventil (9, 29) überwachten Verbindungskanal als Verbindung zu einer die Innenkammern (3, 4; 23, 24) konzentrisch umgebenden Außenkammer aufweist, wobei zwischen der von der Kolbenstange (7, 27) durchdrungenen Innenkammer (3, 23) und der Außenkammer (12, 32) eine einzige Drosselstelle (14, 34) des Stoßdämpfer (1, 21) vorgesehen ist, dadurch gekennzeichnet, daß diese Drosselstelle beim Ein- und Ausfederung des Stoßdämpfers stets in gleicher Richtung durchströmt ist und daß als Flüssigkeit eine rheologische Flüssigkeit verwendet ist, daß ferner Elektroden (22, 33, 35) zum Erstellen eines elektrostatischen Feldes vorgesehen sind und daß die einzige Drosselstelle (34) als ein enger Durchgang zwischen den Elektroden ausgebildet ist.

2. Zweirohr-Stoßdämpfer nach Anspruch 1, dadurch gekennzeichnet, daß die Elektroden (21) im Stoßdämpfer angeordnet sind und vom feststehenden Zylinder (22) getragen werden.

3. Zweirohr-Stoßdämpfer nach Anspruch 1 oder 2, dadurch gekennzeichnet, daß mehrere Elektroden (33) konzentrisch zueinander angeordnet sind, wobei die Summe der lichten Querschnitte zwischen den Elektroden den Drosselquerschnitt der einzigen Drosselstelle (34) bildet.

4. Zweirohr-Stoßdämpfer nach Anspruch 2 oder 3, dadurch gekennzeichnet, daß die Elektroden segmentiert und die Segmente getrennt ansteuerbar sind.

**Claims**

1. Bitubular shock absorber which is arranged between two parts, in particular vehicle parts, the distance between which is changeable, and has a piston (5, 25) carried by a piston rod (7, 27), which piston separates two fluid-filled inner chambers (3, 4; 23, 24) from one another and is provided with a connecting channel controlled by a nonreturn valve (10, 30), and with a cylinder base (8, 28) which likewise has a connecting channel controlled by a nonreturn valve (9, 29) as a connection to an outer chamber concentrically surrounding the inner chambers (3, 4; 23, 24), a single restriction (14, 34) of the shock absorber (1, 21) being provided between the inner chamber (3, 23), penetrated by the piston rod (7, 27), and the outer chamber (12, 32), characterized in that, during the compression and rebounding of the shock absorber, the flow through this restriction is always in the same direction and in that a rheological fluid is used as fluid, in that, furthermore, electrodes (22, 33, 35) for establishing an electrostatic field are provided and in that the single restriction (34) is constructed as a narrow passage between the electrodes.

2. Bitubular shock absorber according to Claim 1, characterized in that the electrodes (21) are arranged in the shock absorber and are supported by the fixed cylinder (22).

3. Bitubular shock absorber according to Claim 1 or 2, characterized in that a plurality of electrodes (33) are arranged concentrically to one another, the sum of the clear cross-section between the electrodes forming the restriction cross-section of the single restriction (34).

4. Bitubular shock absorber according to Claim 2 or 3, characterized in that the electrodes are segmented and the segments are separately controllable.

## Revendications

11. Amortisseur bitubulaire, disposé entre deux parties dont l'écartement réciproque est modifiable, en particulier des parties de véhicule, et qui présente un piston (5, 25), porté par une tige de piston (7, 27), qui sépare l'une de l'autre deux chambres intérieures (3, 4, 23, 24) remplies de liquide, et qui est pourvu d'un canal de liaison contrôlé par une soupape anti-retour (10, 30), et avec un fond de cylindre (8, 28), qui présente également un canal de liaison contrôlé par une soupape anti-retour (9, 29), à titre de liaison vers une chambre extérieure entourant concentriquement les chambres intérieures (3, 4, 23, 24), un unique piont d'étranglement (14, 34) de l'amortisseur (1, 21) étant prévu entre la chambre intérieure (3, 23) pénétrée par la tige de piston (7, 27) et la chambre extérieure (12, 32), caractérisé en ce que, lors de l'enfoncement et du relâchement de l'amortisseur, ce point d'étranglement est l'objet d'un écoulement ayant toujours le même sens et qu'on utilise comme liquide, un liquide rhéologique, qu'en outre des électrodes (22, 33, 35) servant à établir un champ électrostatique sont prévues et que l'unique point d'étranglement (34) est réalisé sous la forme d'un passage étroit entre les électrodes.

2. Amortisseur bitubulaire selon la revendication 1, caractérisé en ce que les électrodes (21) sont disposés dans l'amortisseur et sont portées par le cylindre fixe (22).

3. Amortisseur bitubulaire selon la revendication 1 ou 2, caractérisé en ce que plusieurs électrodes (33) sont disposées concentriquement les unes par rapport aux autres, la somme des sections libres entre les électrodes formant la section d'étranglement de l'unique point d'étranglement (34).

4. Amortisseur bitubulaire selon la revendication 2 ou 3, caractérisé en ce que les électrodes sont ségmentés et que les ségments sont susceptibles d'êtres excités séparément.

FIG.1

FIG.2